# EUROPEAN PATENT SPECIFICATION

(11) **EP 1 801 438 B1**
(45) Date of publication and mention of the grant of the patent: **08.10.2008**
(21) Application number: 05028350.6
(22) Date of filing: 23.12.2005
(51) Int. Cl.: F16C 35/067, F16H 57/02

(54) **Metal carrier for bearings for automobile gearboxes**
Metallträger für Lager für Kraftfahrzeuggetriebe
Support métallique pour roulements pour une boîte de vitesses de vehicule automobile

(43) Date of publication of application: 27.06.2007
(73) Proprietor: Aktiebolaget SKF, 415 50 Göteborg (SE)
(72) Inventor: Pairone, Gianfranco, 10141 Torino (IT); Mola, Roberto, 10138 Torino (IT)
(74) Representative: Lotti, Giorgio

(56) References cited:
- EP-A- 0 029 395
- EP-A- 0 409 564
- DE-A1- 19 805 237
- US-A- 5 310 268

## Description

The present invention relates to a metal carrier for bearings for automobile gearboxes, according to the preamble of claim 1 and as it is disclosed in DE 19805237 A.

In the field of automobile gearboxes, the known carriers comprise a side wall made of a single metal casting, two through cylindrical seats made in mutually adjacent positions through the side wall and having respective mutually parallel axes set at a distance between centres of a length dictated by the geometry of the gearbox, and two rolling-contact bearings, each of which is housed within a respective cylindrical seat for supporting a respective shaft of the automobile gearbox, and has respective axial positioning elements for axial positioning of the corresponding bearing within the corresponding cylindrical seat.

In particular, the axial positioning elements are defined, for each bearing, by a mounting flange made of a single piece with an outer ring of the rolling-contact bearing itself and set bearing upon the side wall, and by a Seeger ring inserted within a groove made outside the outer ring and set on the side opposite to the mounting flange.

Carriers of the type described above present, however, a drawback basically due to the small dimensions of current automobile gearboxes, which prevent both modification of the distance between centres between the axes of the two cylindrical seats, and, possibly, increase of the thickness of a separating diaphragm between the two cylindrical seats. In fact, since the two bearings are mounted both with the corresponding mounting flanges set on the same side as the side wall and since the sum of the external radiuses of the two flanges is greater than the distance between centres between the axes of the two cylindrical seats, it is necessary, before mounting of the bearings in the corresponding cylindrical seats, to smooth a stretch of both of the flanges in order to prevent them from overlapping one another, and said operation simply prolongs the production-cycle times.

The purpose of the present invention is to provide a metal carrier for bearings for automobile gearboxes which is free from the drawbacks described above.

According to the present invention, a metal carrier for bearings for automobile gearboxes is provided, which comprises a side wall made of a single metal casting, two through cylindrical seats made in mutually adjacent positions through the side wall and having respective mutually parallel axes set at a distance between centres of given length, and two rolling-contact bearings, each of which is housed within a respective cylindrical seat and has an axial positioning flange for axial positioning of the bearing with respect to the corresponding cylindrical seat, the unit being characterized in that said positioning flange comprises, for each bearing, a metal portion, which is fixed to an outer ring of the bearing and has an external radius of dimensions at the most equal to one half of the length of said distance between centres, and a plastic portion obtained by co-moulding between the corresponding cylindrical seat and the bearing itself.

The invention will now be described with reference to the annexed plate of drawings, which illustrates a non-limiting example of embodiment thereof, and in which:

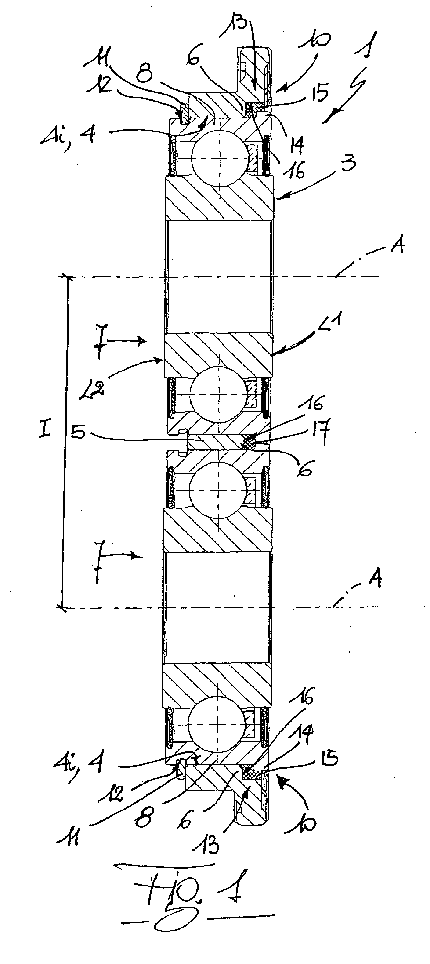

- Figure 1 is a cross-sectional view of a preferred embodiment of the metal carrier for bearings for automobile gearboxes, made according to the present invention; and

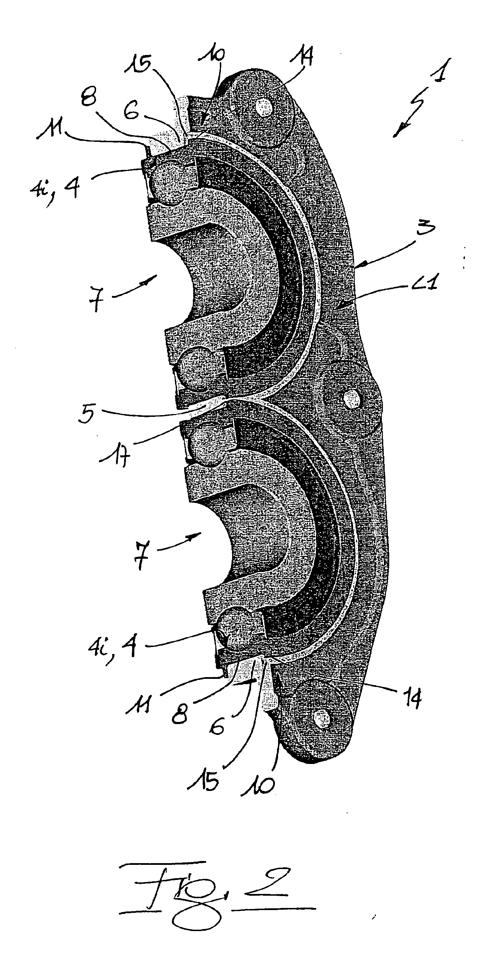

- Figure 2 is a cross-sectional perspective view of the unit of Figure 1.

With reference to the annexed figures, the reference number 1 designates as a whole a metal carrier for bearings for automobile gearboxes.

The unit 1 comprises a side wall 3 made of a single metal casting, preferably cast iron, and two through cylindrical seats 4, which are made in mutually adjacent positions through the side wall 3, and have respective axes A mutually parallel and set at a distance between centres I of a given length.

The wall 3 is designed to support the terminal portion of the shafts (not illustrated) of an automobile gearbox and has rather contained dimensions that affect the dimensions of all the other components of the unit 1. The two seats 4 present the same geometrical characteristics, are separated from one another by a diaphragm 5, and are each provided with a respective internal shoulder 6, which is made starting from a side L1 of the side wall 3 and, in a position corresponding to the diaphragm 5, is shared by both of the seats 4. It should be pointed out that the diaphragm 5 has a very small thickness S at least in the point of maximum vicinity of the two seats 4.

The unit 1 further comprises two rolling-contact bearings 7, each of which is housed within a respective cylindrical seat 4 for being set between a corresponding aforesaid shaft and the wall 3, and comprises a respective outer ring 8, which is set partially in contact with an internal surface 4i of the corresponding seat 4, and comes out of the seat 4 towards a side L2 opposite to the side L1 in so far as the thickness of the wall 3 is smaller than the thickness of each bearing 7.

On the side L2, each outer ring 8 is provided with a respective annular groove 12, which is made outside the ring 8 itself and is positioned substantially flush with the side L2 of the wall 3 once the bearing is inserted in the corresponding seat 4.

Each bearing 7 moreover comprises respective axial positioning elements 10, which position the bearing 7 itself axially with respect to the wall 3 and also fix axially the bearing 7 itself within the corresponding seat 4.

The axial positioning elements 10 of each bearing comprise a Seeger ring 11 partially inserted within the groove 12 and set up against the side L2 of the wall 3, and a mounting flange 13, which is set bearing upon the corresponding shoulder 6 and comprises a metal tooth 14 fixed to the ring 8 and having an external radius of a size at the most equal to one half of the length of the distance between centres I, and a plastic portion 15 obtained by co-moulding between the corresponding seat 4 and the bearing 7 and fixed to the corresponding tooth 14.

The metal tooth 14 extends radially towards the outside of the ring 8 and, if compared with the mounting flanges of the known type commonly used up to now, is of both axial and radial dimensions smaller than those of the aforesaid mounting flanges. Furthermore, the metal tooth 14 has a radial thickness D of a size smaller than one half of the size of the thickness S of the diaphragm 5 and enables positioning of both of the bearings 7 within the corresponding seats 4, without any overlapping in a position corresponding to the diaphragm 5 itself.

In particular, once the corresponding bearing 7 has been inserted into the corresponding seat 3 and has been blocked on the side L2 with the corresponding Seeger ring 11, the corresponding tooth 14 is set facing and not in contact with the shoulder 6 to define with the latter a respective annular space 16 for co-moulding designed to be filled with plastic material.

The co-moulding of the material plastic within the space 16 enables both filling of the space 16 of each seat 4 and formation of each plastic portion 15, which has an L-shaped cross section and is set both axially and radially between the tooth 14 and the corresponding seat 4.

The portion 15 of a bearing 7 has, in a position corresponding to the diaphragm 5, a stretch 17 in common with the portion 15 of the other bearing 7, and defines a detent and axial positioning element for each corresponding tooth 14. In this way, not only is it possible to mount the bearings 7 within the corresponding seats 4 without having to subject the bearings 7 themselves to any supplementary machining, but it is also possible to define the axial position of the bearings 7 within the corresponding seats 4 precisely and with decidedly reduced tolerances.

In fact, once the formation of each portion 15 is completed, the latter behaves from the static standpoint exactly in the same way as the corresponding tooth 14, to which it is on the other hand intimately connected as a result of the co-moulding process.
The mixed conformation of the flanges 13, made in the assembly stage, enables the production of bearings 7 with a smaller weight and with a reduction in the number of metal parts to be finished, and, as has already been said; enables not only avoidance of those machining operations that up to now were necessary for assembly of the bearings 7 on the wall 3 but also assurance of a precise positioning of the bearings 7 themselves with respect to the wall 3, likewise reducing the risks of possible axial movements due to the fitting and machining tolerances.

It is understood that the invention is not limited to the embodiment described and illustrated herein, which is to be considered as example of embodiment of the metal carrier for bearings for automobile gearboxes, which instead may undergo further modifications as regards shapes and arrangements of parts and details of construction and assembly.

## Claims

1. A carrier (1) made of metal for bearings for automobile gearboxes comprising a side wall (3) made of a single metal casting, two through cylindrical seats (4), which are made in mutually adjacent positions through the side wall (3) and have respective mutually parallel axes (A) set at a distance between centres (I) of a given length, and two rolling-contact bearings (7), each of which is housed within a respective cylindrical seat (4) and has an axial positioning flange (13) for axial positioning of the bearing (7) with respect to the corresponding cylindrical seat (4); the unit being **characterized in that** said positioning flange (13) comprises, for each bearing (7), a metal portion (14), which is fixed to an outer ring (8) of the bearing (7) and has an external radius of dimensions at the most equal to one half of the length of said distance between centres, and a plastic portion (15) obtained by co-moulding between the corresponding cylindrical seat (4) and the bearing (7) itself.

2. The carrier according to Claim 1, **characterized in that** said co-moulded plastic portion (15) of each bearing (7) is set both radially and axially between the corresponding metal portion (14) and the corresponding cylindrical seat (4).

3. The carrier according to Claim 2, **characterized in that** each said cylindrical seat (4) has an internal detent shoulder (6) for the corresponding said positioning flange (13), which defines, with the corresponding metal portion (14), an annular co-moulding space (16) for said co-moulded plastic portion (15).

4. The carrier according to Claim 3, **characterized in that** the plastic portion (15) is co-moulded within said space (16) for co-moulding following upon mounting of the bearing (7) within the corresponding cylindrical seat (4).

5. A rolling-contact bearing (7) for the carrier according to Claim 1, comprising an outer ring (8) and an axial positioning flange (13) for axial positioning of the bearing (7) with respect to a mounting seat (4); the bearing (7) being **characterized in that** said positioning flange (13) comprises a metal portion (14) fixed to the outer ring (8), and a plastic portion (15) made by co-moulding on the metal portion (14) itself with the bearing (7) already set within the mounting seat (4).

6. The bearing according to Claim 5, **characterized in that** said plastic portion (15) is co-moulded within the co-moulding space (16) present in the mounting seat (4) following upon mounting of the bearing (7) in the mounting seat (4) itself.

## Patentansprüche

1. Halterung (1) aus Metall für Lager für Kraftfahrzeuggetriebe, mit einer Seitenwand (3), die aus einem einzigen Metallgussteil hergestellt ist, zwei durchgehenden zylindrischen Aufnahmen (4), die in gegenseitig benachbarten Positionen durch die Seitenwand (3) hergestellt sind und zugehörige beiderseitig parallele Achsen (A) haben, die in einem Achsabstand (I) einer gegebenen Länge festgelegt sind, und zwei Wälzlagern (7), die jeweils innerhalb einer der beiden zylindrischen Aufnahmen (4) aufgenommen sind und einen axialen Positionierungsflansch (13) zum axialen Positionieren des Lagers (7) in Bezug auf die entsprechende zylindrische Aufnahme (4) haben; wobei die Einheit **dadurch gekennzeichnet ist, dass** der Positionierungsflansch (13) für jedes Lager (7) einen Metallteil (14), der an einem Außenring (8) des Lagers (7) befestigt ist und einen Außenradius mit Abmessungen von maximal der Hälfte der Länge des Achsabstandes hat, und einen Kunststoffteil (15) umfasst, der durch Co-Formen zwischen der entsprechenden zylindrischen Aufnahme (4) und dem Lager (7) selbst erlangt ist.

2. Halterung nach Anspruch 1, **dadurch gekennzeichnet, dass** der eingeformte Kunststoffteil (15) eines jeden Lagers (7) sowohl radial als auch axial zwischen dem entsprechenden Metallteil (14) und der entsprechenden zylindrischen Aufnahme (4) festgelegt ist.

3. Halterung nach Anspruch 2, **dadurch gekennzeichnet, dass** jede zylindrische Aufnahme (4) einen internen Rastabsatz (6) für den entsprechenden Positionierungsflansch (13) aufweist, der mit dem entsprechenden Metallteil (14) einen ringförmigen Einformraum (16) für den eingeformten Kunststoffteil (15) definiert.

4. Halterung nach Anspruch 3, **dadurch gekennzeichnet, dass** der Kunststoffteil (15) innerhalb des Raumes (16) zum Einformen im Anschluss an das Montieren des Lagers (7) innerhalb der entsprechenden zylindrischen Aufnahme (4) eingeformt ist.

5. Wälzlager (7) für die Halterung nach Anspruch 1, mit einem Außenring (8) und einem axialen Positionierungsflansch (13) zum axialen Positionieren des Lagers (7) in Bezug auf eine Lageraufnahme (4), wobei das Lager (7) **dadurch gekennzeichnet ist, dass** der Positionierungsflansch (13) einen Metallteil (14), der an dem Außenring (8) befestigt ist, und einen Kunststoffteil (15) umfasst, der durch Einformen an dem Metallteil (14) selbst hergestellt ist, wobei das Lager (7) bereits innerhalb der Lageraufnahme (4) eingesetzt ist.

6. Lager nach Anspruch 5, **dadurch gekennzeichnet, dass** der Kunststoffteil (15) innerhalb des in der Montageaufnahme (4) vorhandenen Einformraumes (16) im Anschluss an das Anbringen des Lagers (7) selbst in der Montageaufnahme (4) eingeformt ist.

## Revendications

1. Support (1) constitué de métal pour des paliers destinés à des boîtes de vitesses d'automobiles comprenant Une paroi latérale (3) constituée d'un moulage unitaire en métal, deux sièges cylindriques traversants (4), qui sont réalisés à des positions mutuellement adjacentes au travers de la paroi latérale (3) et comportent des axes respectifs mutuellement parallèles (A) calés à une distance entre centres (I) d'une longueur donnée, et deux paliers à roulements (7), dont chacun est logé à l'intérieur d'un siège cylindrique respectif (4) et comporte une bride de positionnement axial (13) pour le positionnement axial du palier (7) par rapport au siège cylindrique correspondant (4), l'unité étant **caractérisée en ce que** ladite bride de positionnement (13) comprend, pour chaque palier (7), une partie de métal (14) qui est fixée à une bague extérieure (8) du palier (7) et présente un rayon externe de dimension au moins équivalente à la moitié de la longueur de ladite distance entre centres, et une partie de matière plastique (15) obtenue par un co-moulage entre le siège cylindrique correspondant (4) et le palier (7) lui-même.

2. Support selon la revendication 1, **caractérisé en ce que** ladite partie de matière plastique co-moulée (15) de chaque palier (7) est positionnée à la fois radialement et axialement entre la partie de métal correspondante (14) et le siège cylindrique correspondant (4).

3. Support selon la revendication 2, **caractérisé en ce que** chaque dit siège cylindrique (4) comporte un épaulement de butée interne (6) pour ladite bride de positionnement correspondante (13), qui définit, avec la partie de métal correspondante (14), un espace de co-moulage annulaire (16) pour ladite partie de matière plastique co-moulée (15).

4. Support selon la revendication 3, **caractérisé en ce que** la partie de matière plastique (15) est co-moulée à l'intérieur dudit espace (16) pour co-moulage après le montage du palier (7) à l'intérieur du siège cylindrique correspondant (4).

5. Palier à roulement (7) pour le support selon la revendication 1, comprenant une bague extérieure (8) et une bride de positionnement axial (13) pour un positionnement axial du palier (7) par rapport à un siège de montage (4), ledit palier (7) étant **caractérisé en ce que** ladite bride de positionnement (13) comprend une partie de métal (14) fixée à la bague extérieure (8) et une partie de matière plastique (15) réalisée par un co-moulage sur la partie de métal (14) elle-même avec le palier (7) déjà positionné à l'intérieur du siège de montage (4).

6. Palier selon la revendication 5, **caractérisé en ce que** ladite partie de matière plastique (15) est co-moulée à l'intérieur de l'espace de co-moulage (16) présent dans le siège de montage (4) à la suite d'un montage du palier (7) dans le siège de montage (4) lui-même.
